# EUROPÄISCHE PATENTSCHRIFT

(11) **EP 3 237 866 B1**
(45) Veröffentlichungstag und Bekanntmachung des Hinweises auf die Patenterteilung: **26.10.2022**
(21) Anmeldenummer: 15795190.6
(22) Anmeldetag: 18.11.2015
(51) Int. Cl.: G01L 9/00

(54) **DRUCKWANDLER UND VERFAHREN ZUM BETREIBEN EINES SOLCHEN DRUCKWANDLERS**
PRESSURE TRANSDUCER AND METHOD FOR OPERATING SAME
CONVERTISSEUR DE PRESSION ET PROCÉDÉ PERMETTANT DE FAIRE FONCTIONNER LEDIT CONVERTISSEUR

(30) Priorität: 22.12.2014 DE 102014119400
(43) Veröffentlichungstag der Anmeldung: 01.11.2017
(73) Patentinhaber: Endress+Hauser SE+Co. KG, 79689 Maulburg (DE)
(72) Erfinder: THAM, Anh Tuan, 14089 Berlin (DE)
(74) Vertreter: Laufer, Michael
(86) Internationale Anmeldenummer: PCT/EP2015/076910
(87) Internationale Veröffentlichungsnummer: WO 2016/102119

(56) Entgegenhaltungen:
- EP-A1- 2 137 505
- EP-A2- 0 490 486
- DE-A1-102007 027 274
- DE-A1-102009 001 133
- US-A- 6 029 524

## Beschreibung

Die Erfindung bezieht sich auf einen Druckwandler und ein Verfahren zum Betreiben eines solchen Druckwandlers.

Druckwandler dienen u.A. zur Erfassung von Differenzdrücken und werden beispielsweise in, in der industriellen Messtechnik verwendeten Differenzdruckmessaufnehmern eingesetzt. Dort werden sie beispielsweise zur Füllstandsmessung oder zur Durchflussmessung verwendet. Bei der Füllstandsmessung wird beispielsweise die Differenz zwischen einem unten in einem Behälter wirkenden ersten Druck und einem oberhalb des Füllguts herrschenden zweiten Druck gemessen. Die Differenz ist proportional zu einem füllstands-abhängigen hydrostatischen Druck im Behälter und damit zum Füllstand. Bei der Durchflussmessung wird beispielsweise ein Strömungswiderstand in eine Leitung eingesetzt und mittels eines Differenzdruckmessaufnehmers eine Differenz eines vor dem Widerstand herrschenden ersten Drucks und eines hinter dem Widerstand herrschenden zweiten Drucks ermittelt. Dieser Differenzdruck ist ein Maß für den Durchfluss durch die Leitung.

In der Druckmesstechnik werden gerne Halbleiter-Drucksensor-Chips, z.B. Silizium-Chips mit dotierten Widerstandselementen, als druckempfindliche Elemente eingesetzt. Derartige Drucksensor-Chips umfassen eine Messmembran, deren eine Seite im Messbetrieb einem ersten Druck und deren zweite Seite einem zweiten Druck ausgesetzt wird. Die einwirkenden Drücke bewirken eine resultierende Auslenkung der Messmembran, die dem zu messenden Druck entspricht. Drucksensor-Chips sind in der Regel sehr empfindlich und werden deshalb nicht direkt einem Medium ausgesetzt, dessen Druck aufgenommen werden soll. Stattdessen werden mit einer Flüssigkeit gefüllte Druckmittler vorgeschaltet.

Druckmessaufnehmer weisen hierzu regelmäßig einen massiven typischerweise mehrteiligen metallischen Messaufnehmerblock auf, auf dem außenseitlich eine erste und eine dieser parallel dazu gegenüberliegend angeordnete zweite Trennmembranen angeordnet sind. Dabei schließt die erste Trennmembran eine erste Druckempfangskammer ab, die über eine Druckübertragungsleitung mit einer ersten Druckmesskammer verbunden ist. Entsprechend schließt die zweite Trennmembran eine zweite Druckempfangskammer ab, die über eine Druckübertragungsleitung mit einer zweiten Druckmesskammer verbunden ist. Die erste und die zweite Druckmesskammer sind durch die Messmembran des Differenzdrucksensors voneinander getrennt.

Die beiden Druckempfangskammern, die beiden Druckmesskammern sowie die Druckübertragungsleitungen sind mit einer Druck übertragenden Flüssigkeit gefüllt, die dazu dient, den von außen auf die jeweilige Trennmembran einwirkenden Druck auf die jeweils zugeordnete Seite der Messmembran zu übertragen.

Im alltäglichen Messbetrieb kommt es immer wieder zu Störungen bis hin zu Ausfällen von solchen Druckwandlern. Daneben weise derartige Druckwandler das Problem auf, dass sie einer Drift unterliegen, die dazu führt, dass möglicherweise eine verfälschte Druckmessgröße ermittelt wird.

Um z. B. derartige Störungen des Druckwandlers oder eine Drift zu erkennen ist es notwendig, dass der Sensor während des Betriebs kontrolliert wird. Dadurch wird die Sicherheit und/oder Genauigkeit der erfassten Druckmessgröße erhöht.

Aus dem Stand der Technik sind die DE 10 2009 001133 A1, die DE 10 2007 027274 A1 und die EP 0 490 486 A2 bekannt geworden. Die DE 10 2009 001133 A1 offenbart einen Drucksensor, insbesondere einen Drucksensor mit einem Halbleiterdruckmesswandler. Die DE 10 2007 027274 A1 offenbart einen Differenzdrucksensor, der ein hohes Maß an Messsicherheit bietet. Die EP 0 490 486 A2 offenbart einen Mikrominiatur-Differenzdruckwandler und ein entsprechendes Herstellungsverfahren dazu.

Es ist daher Aufgabe der Erfindung einen Druckwandler vorzuschlagen, der eine erhöhte Sicherheit und/oder Genauigkeit der erfassten Druckmessgröße ermöglicht.

Die Aufgabe wird durch einen Druckwandler und ein Verfahren zum Betreiben eines solchen Druckwandlers gelöst.

Hinsichtlich des Druckwandlers wird die Aufgabe durch einen Druckwandler zum Bestimmen einer Druckmessgröße gelöst, zumindest umfassend einen Drucksensor mit einer Messmembran und in die Messmembran integrierten Widerstandselementen, wobei der Drucksensor zwischen einem ersten und einem zweiten Gegenkörper angeordnet ist und in seinem Randbereich stoffschlüssig zumindest mit dem ersten Gegenkörper verbunden ist, sodass sich eine Druckkammer zwischen der Messmembran und dem ersten Gegenkörper ausbildet, welche mit einem ersten Druck beaufschlagbar ist, wobei die dem zweiten Gegenkörper zugewandte Seite der Messmembran mit einem zweiten Druck beaufschlagbar ist und sich eine Auslenkung der Messmembran abhängig von dem ersten und zweiten Druck einstellt, wobei die druckabhängige Auslenkung der Messmembran durch die integrierten Widerstandselemente erfassbar ist und über eine Brückenspannung einer Brückenschaltung, die mit den integrierten Widerstandselementen gebildet ist, eine Druckmessgröße ermittelbar ist, wobei die Messmembran eine Membranelektrode aufweist und der zweite Gegenkörper auf der der Messmembran zugewandten Seite zumindest in dem Bereich der Messmembran eine Gegenkörperelektrode aufweist, sodass die Membranelektrode und die Gegenkörperelektrode eine Kapazität ausbilden, wobei anhand der Kapazität zumindest eine Zusatzinformation ermittelbar ist und der Druckwandler weiterhin eine Betriebsschaltung (32) zum Ermitteln der Kapazität und/oder deren Verlauf umfasst, die dazu eingerichtet ist, anhand der Kapazität und/oder deren Verlauf und/oder der Brückenspannung (UB) und/oder deren Verlauf als eine Zusatzinformation einer Drift der Brückenspannung (UB) zu erkennen. Erfindungsgemäß wird also durch das Ausbilden der Messmembran als Membranelektrode und das Einbringen einer Gegenkörperelektrode eine Kapazität ausgebildet. Durch die Kapazität lassen sich, im Vergleich zu den aus dem Stand der Technik bekannten Druckwandler, die entweder einen resistiven oder kapazitiven Widerstands-Effekt ausnutzen, um eine Druckmessgröße zu ermitteln, zusätzliche Diagnostikfunktionen durchführen. Derartige Diagnostikfunktionen sind bspw. das Ermitteln von Zusatzinformationen über den Druckwandler und/oder das Durchführen von Zusatzfunktionen, die aufgrund der eingebrachten Kapazität ermöglicht werden.

Eine vorteilhafte Ausgestaltung sieht vor, dass die integrierten Widerstandselemente in Bezug auf ein Substrat des Drucksensors als ein p-n-Übergang ausgebildet sind und/oder die Membranelektrode in Bezug auf das Substrat als p-n-Übergang ausgebildet ist.

Eine weitere vorteilhafte Ausgestaltung sieht vor, dass die Betriebsschaltung ferner zum Durchführen zumindest einer Zusatzfunktion anhand der Kapazität eingerichtet ist. Insbesondere ist vorgesehen, dass die Betriebsschaltung dazu eingerichtet ist, eine variable bzw. einstellbare Spannung an die Membranelektrode und die Gegenkörperelektrode anzulegen. Eine weitere vorteilhafte Ausgestaltung sieht vor, dass der zweite Gegenkörper Kunststoff oder Keramik aufweist.

Eine vorteilhafte Ausgestaltung sieht vor, dass der Drucksensor im Wesentlichen Silizium aufweist.

Eine vorteilhafte Ausgestaltung sieht vor, dass die Membranelektrode mit dem spannungsmäßig höchsten oder dem niedrigsten Punkt der Brückenschaltung verbunden ist.

Hinsichtlich des Verfahrens wird die Aufgabe erfindungsgemäß durch ein Verfahren zum Betreiben eines Druckwandlers nach einem oder mehreren der vorhergehenden Ansprüche, wobei das Verfahren folgende Schritte aufweist:
- Ermitteln der Kapazität und/oder deren Verlauf;
- Ermitteln der zumindest einen Zusatzinformation, wobei anhand der Kapazität und/oder deren Verlauf und/oder der Brückenspannung und/oder deren Verlauf als Zusatzinformation einer Drift der Brückenspannung erkannt wird.

Eine vorteilhafte Ausführungsform sieht vor, dass ein Vergleich der Brückenspannung und/oder deren Verlauf mit einer der Kapazität entsprechenden Kapazitätsspannung und/oder deren Verlauf durchgeführt wird und in dem Fall, dass die Brückenspannung und/oder deren Verlauf und die Kapazitätsspannung und/oder deren Verlauf in einem vorgegebenen Toleranzbereich übereinstimmen, die ermittelte aktuelle Druckmessgröße als vertrauenswürdig angesehen wird.

Insbesondere sieht die Ausführungsform vor, dass die Brückenspannung und/oder deren Verlauf und/oder die Kapazitätsspannung und/oder deren Verlauf nicht in dem vorgegebenen Toleranzbereich übereinstimmen, als Zusatzinformation eine Veränderung des Druckwandlers festgestellt wird.

Ein derartiger Toleranzbereich variiert von Druckmittler zu Druckmittler, abhängig u.A. davon, zu welchem Zweck der Druckmittler eingesetzt werden soll. So kann bspw. für ein so genannten "low-cost" Druckmittler der Toleranzbereich deutlich größer sein als für ein "high-end" Druckmittler.

Somit ist ein Toleranzbereich von 1% vom Messwert, bevorzugt von 0,5% vom Messwert, besonders bevorzugt 0,2% vom Messwert günstig.

Bevorzugt sieht die Ausführungsform vor, dass zur Erkennung der Drift der Brückenspannung als Prüfkriterium die Kapazität und/oder deren Verlauf und die Brückenspannung und/oder deren Verlauf ins Verhältnis gesetzt werden. Besonders bevorzugt kann vorgesehen sein, dass eine Drift der Brückenspannung erkannt wird, wenn die Kapazität und/oder deren Verlauf im Wesentlichen konstant ist, d.h. unverändert im Rahmen der Messauflösung und die Brückenspannung nicht konstant ist, sich also ändert.

Eine weitere vorteilhafte Ausführungsform sieht vor, dass eine Überprüfung einer Prozessmembran, die den Druckwandler von einem Prozessmedium trennt, als Zusatzfunktion durchgeführt wird, wobei ein Fehler der Prozessmembran erkannt wird, wenn die Kapazität und/oder deren Verlauf sich ändert und die Brückenspannung und/oder deren Verlauf im Wesentlichen konstant ist.

Eine weitere vorteilhafte Ausführungsform sieht vor, dass durch die Betriebsschaltung eine Testspannung an die Membranelektrode und die Gegenkörperelektrode angelegt wird, sodass sich eine Abstandsänderung zwischen der Membranelektrode und der Gegenkörperelektrode einstellt und ein Selbsttest als Zusatzfunktion durchgeführt wird, in dem das Verhältnis der Brückenspannung und/oder deren Verlauf zu der Kapazität und/oder deren Verlauf überprüft wird, und in dem Fall, dass dieses Verhältnis nicht in einem vorgegebenen Toleranzbereich liegt, eine Veränderung des Druckwandlers erkannt wird.

Die Erfindung wird anhand der nachfolgenden Zeichnungen näher erläutert. Es zeigt:
Fig. 1a: eine Detaildarstellung eines Füllkörpers und einer Isolatorplatte bzw. eines zweiten Gegenkörpers einer bevorzugten Ausgestaltung der Erfindung,
Fig. 1b: eine erste räumliche Darstellung des erfindungsgemäßen Druckwandlers (ohne den zweiten Gegenkörper),
Fig. 1c: eine zweite räumliche Darstellung des erfindungsgemäßen Druckwandlers (mit dem zweiten Gegenkörper),
Fig. 1d: einen schematischen Längsschnitt durch einen erfindungsgemäßen Druckwandler,
Fig. 2: eine schematischen Schnitt des in dem Druckwandler befindlichen Drucksensors sowie des zweiten Gegenkörpers,
Fig. 3: eine Draufsicht auf den in dem Druckwandler befindlichen Drucksensor, und
Fig. 4: eine schematische Darstellung einer Brückenschaltung, die zur Erfassung der Widerstandswerte der Widerstandselemente dient.

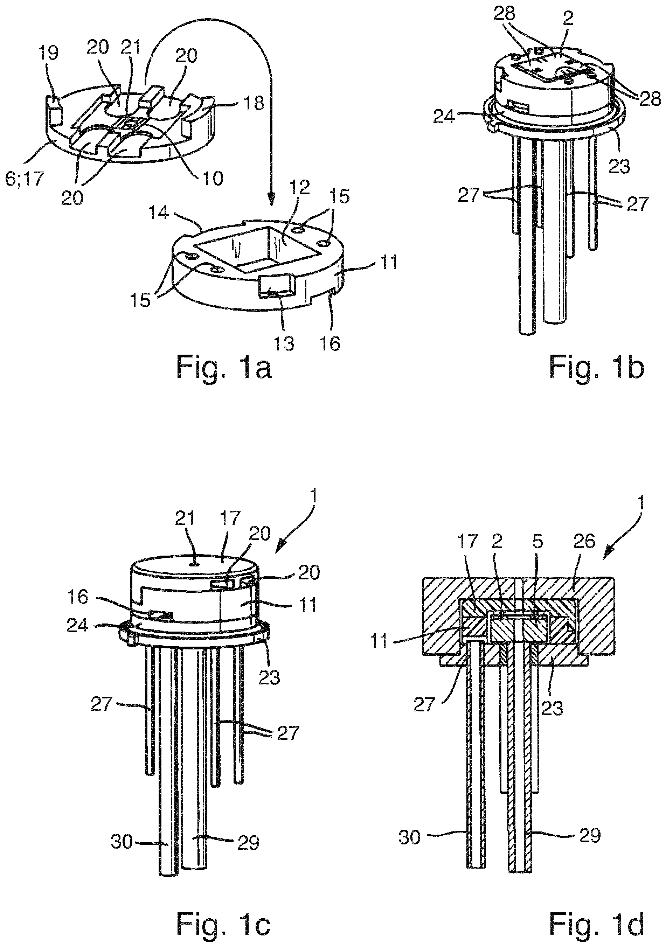

Der in Fig. 1 dargestellte Füllkörper 11, hat im Wesentlichen eine zylindrische Grundform, wobei in seinem Inneren ein insbesondere quadratischer Durchbruch 12 vorhanden ist, in dem ein Drucksensor 2 aufzunehmen ist. Die Kontur des Durchbruchs 12 ist dabei der Kontur des Drucksensors 2 in der Weise anzupassen, dass ein Spalt zwischen dem Drucksensor 2 und dem Füllkörper 11 verbleibt, der einerseits eine Berührung der Bauteile vermeidet und einen vollständige Benetzung der Oberflächen des Drucksensors 2 mit der Übertragungsflüssigkeit ermöglicht und der andererseits unter Einhaltung der obigen Bedingungen möglichst schmal ausgebildet ist, um das Volumen der Übertragungsflüssigkeit zu minimieren.

An seiner Oberseite weist der Füllkörper 11 entlang seines Umfangs eine erste Aussparung 13 und eine zweite Aussparung 14 auf, welche zur Aufnahme von komplementären ersten und zweiten axialen Vorsprüngen 18, 19 an einem zweiten Gegenkörper 6 bzw. einer Isolatorplatte 17 dienen.

Die Stirnfläche des Füllkörpers 11 weist in der dargestellten Ausgestaltung der Erfindung eine hinreichend große glatte Oberfläche auf, an welcher der Füllkörper 11 mittels eines Saugwerkzeugs angehoben und transportiert werden kann.

Durch den Füllkörper 11 erstrecken sich von dessen Stirnfläche vier axiale Bohrungen 15, durch welche elektrische Anschlüsse für den Drucksensor 2 geführt werden können.

Weiterhin ist an der Unterseite des Umfangs des Füllkörpers 11 eine Aussparung 16 ausgebildet, die als Austrittsöffnung für die Übertragungsflüssigkeit beim Befüllen einer fluidischen Kammer, welche zwischen einer Prozessmembran und dem Spalt zwischen dem Drucksensor 2 und dem Füllkörper 11 ausgebildet ist, dient.

Eine kreisscheibenförmige Isolatorplatte 17 ist in Fig. 1a mit ihrer Unterseite nach oben dargestellt. Sie weist entlang ihres Umfangs einen ersten axialen Vorsprung 18 und einen zweiten axialen Vorsprung 19 auf, wobei die beiden axialen Vorsprünge dazu vorgesehen sind, in die beiden Aussparungen entlang des Umfangs der Oberseite des Füllkörpers formschlüssig einzugreifen. Insoweit, als sich die Vorsprünge bzw. die Aussparungen sich jeweils in ihrer Größe voneinander unterscheiden bzw. nicht rotationssymmetrisch bezüglich der Zylinderachse des Füllkörpers verteilt sind, ist die Orientierung der Isolierplatte bezüglich des Deckels durch die Vorsprünge eindeutig festgelegt. Die Isolierplatte 17 weist an ihrer Unterseite vier Aussparungen 20 auf, welche dazu vorgesehen sind, Anschlussdrähten zur Kontaktierung des Drucksensors Raum zu geben. Im Zentrum der Isolatorplatte 17 verläuft eine axiale Bohrung. Sie dient als ein mit dem Zentrum einer Messmembran des Drucksensors fluchtender Kanal für die

Übertragungsflüssigkeit. Dieser Kanal verbessert das dynamische Ansprechverhalten des Drucksensors, er ist aber nicht zwingend erforderlich. Weiterhin umfasst die Isolatorplatte erfindungsgemäß eine Gegenkörperelektrode, die, wenn die Isolatorplatte formschlüssig mit dem Füllkörper verbunden ist, zusammen mit einer Membranelektrode, welche die Messmembran aufweist, eine Kapazität bilden.

In Fig 1 b ist eine erste Wandbaugruppe 22 dargestellt, welche einen Trägerkörper 23 aufweist, auf dem der Drucksensor 2 mit einer drucktragenden Verbindung, auf deren Einzelheiten es hier nicht ankommt, befestigt ist. Um den Drucksensor 2, ist bereits der Füllkörper 11 angeordnet, der beispielsweise mit dem Trägerkörper 23 verklebt sein kann. Der Trägerkörper 23 umfasst eine Sockelplatte 24, über die ein ringförmiger Schweißrand 25 radial hinausragt. Entlang dieses Schweißrands 25 kann der Trägerkörper 23 mit einer zweiten Wandbaugruppe 26 verschweißt werden, um die fluidische Kammer zu verschließen. Durch die Sockelplatte 24 des Trägerkörpers 23 erstrecken sich in axialer Richtung vier elektrische Durchführungen 27 welche mit den Bohrungen 15 durch den Füllkörper 11 fluchten, wobei die Durchführungen 27 Kontaktstifte aufweisen, welche sich in axialer Richtung vorzugsweise etwa bis zur Oberfläche des Füllkörpers 11 erstrecken. Gleichermaßen fluchtet die Oberfläche des Drucksensors 2 etwa mit der Oberfläche des Füllkörpers 11. Somit können Kontaktflächen an der Oberfläche des Drucksensors 2 mittels eines Montage-Roboters über Bond-Drähte 28 automatisiert an die Kontaktstifte angeschlossen werden. Die elektrischen Durchführungen 27 erstrecken sich auf der Unterseite des Trägerkörpers 23 weit aus diesem heraus, so dass sie eine Vergussmasse durchdringen können, die nach einem späteren Montageschritt die Unterseite des Trägerkörpers bedecken wird.

Durch die Sockelplatte 24 erstreckt sich weiterhin ein Referenzluftrohr 29, welches etwa im Zentrum des Sockels in axialer Richtung verläuft, um die Messmembran des Drucksensors 2 rückseitig mit Atmosphärendruck zu beaufschlagen. Das Ausführungsbeispiel betrifft offensichtlich einen Relativdrucksensor. Selbstverständlich umfasst die Erfindung auch Absolutducksensoren, bei denen die Messmembran rückseitig einen evakuierten Raum verschließt. In diesem Fall ist dann kein Referenzluftpfad vorhanden.

Weiterhin erstreckt sich durch die Sockelplatte 24 ein Befüllrohr 30, welches unter der Aussparung 16 des Füllkörpers endet, und durch welches die fluidische Kammer mit einer Übertragungsflüssigkeit gefüllt werden kann bzw. im fertigen Drucksensor befüllt ist.

Fig. 1c zeigt den nächsten Montageschritt für die Komponenten aus Fig. 1b, wobei zusätzlich die Isolatorplatte 17 auf den Füllkörper 11 aufgesetzt ist. Die seitlichen Aussparungen 20 an der Unterseite der Isolatorplatte geben einerseits den Bonddrähten zur Kontaktierung des Drucksensors 2 den erforderlichen Raum, und andererseits dienen sie als Durchtrittsöffnungen für die Übertragungsflüssigkeit.

Die Schnittzeichnung in Fig. 1d zeigt den nächsten Montageschritt zur Herstellung des Druckwandlers. Die zweite Wandbaugruppe 26, die hier vereinfacht dargestellt ist, umfasst eine Kammerbohrung 31, in welche die auf dem Trägerkörper 23 montierten Teile, also der Füllkörper 11, die Isolatorplatte 17, und der Drucksensor 2 mit einem hier erkennbaren ersten Glas- bzw. Halbleitergegenkörper 5 unter dem Drucksensor 2, eingeschoben sind, wobei der Trägerkörper 23 entlang seines Schweißrands druckdicht mit der zweiten Wandbaugruppe 26 verschweißt ist. Wie in Fig. 1d erkennbar, mündet an der Stirnseite der Kammerbohrung 31 ein Kanal, über welchen der Drucksensor 2 durch die fluidische Kammer mit einem zu messenden Mediendruck mittels einer Übertragungsflüssigkeit beaufschlagbar ist. Hierbei wirkt der Mediendruck auf die dem Kanal zugewandte, frontseitige Oberfläche der Messmembran 3 des Drucksensors 2, während die rückseitige Oberfläche der Messmembran 3 über den Referenzluftrohr bzw. -kanal 29 mit Atmosphärendruck beaufschlagbar ist. Das Ausführungsbeispiel betrifft, wie bereits erwähnt, einen Relativdrucksensor. Selbstverständlich umfasst die Erfindung auch Absolutducksensoren, bei denen die Messmembran rückseitig einen evakuierten Raum verschließt. In diesem Fall ist dann kein Referenzluftrohr vorhanden.

Das Material des Füllkörpers 11 und der Isolatorplatte 17 umfasst beispielsweise einen temperaturbeständigen Kunststoff, der bezüglich der Übertragungsflüssigkeit chemisch inert ist, beispielsweise PPS.

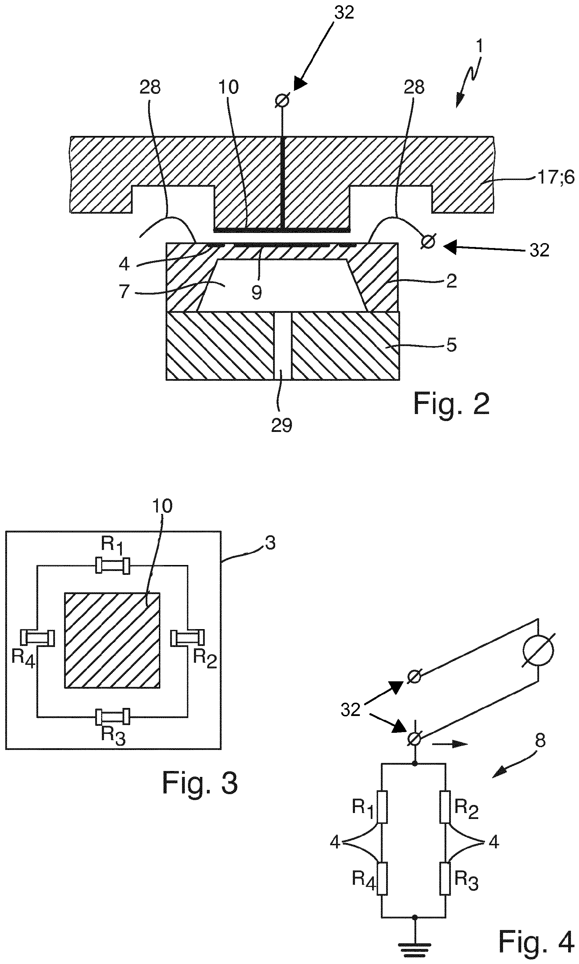

Fig. 2 zeigt zur Verdeutlichung einen schematischen Schnitt durch den Halbleiter-Drucksensor 2 der zwischen dem ersten Gegenkörper 5 und dem zweiten Gegenkörper 6 angeordnet ist. Wie in der Figurenbeschreibung zu Fig. 1 erläutert, kann der erste Gegenkörper 5 bspw. ein Glas- oder Halbleitergegenkörper dienen und der zweite Gegenkörper 6 als Isolatorplatte 17 ausgebildet sein.

Erfindungsgemäß umfasst der Druckwandler 1 zumindest den mittels herkömmlichen Halbleiterverfahren hergestellten Drucksensor 2 mit der Messmembran 3 und in die Messmembran 3 integrierte, insbesondere piezoresistive Widerstandselemente 4, sowie eine Membranelektrode 9, die in diesem Ausführungsbeispiel ebenfalls in die Messmembran 3 integriert ist. Denkbar ist aber auch eine Ausführung bei der die Membranelektrode 9 in Form einer elektrisch leitfähigen Schicht, bspw. eine metallische Schicht, aufgebracht ist.

Die integrierten Widerstände 4 als auch die Membranelektrode 9 sind in diesem Ausführungsbeispiel durch ein Dotierverfahren in die Messmembran eingebracht, sodass sie eine erhöhte Dotierung im Vergleich zu deren Umgebung aufweisen. Um einen weiteren Dotierungsschritt einzusparen, werden die Widerstandselemente 4 und die Membranelektrode 9 auf dieselbe Weise dotiert, sodass sie vom selben Dotierungstyp sind.

Wie aus Fig. 2 ersichtlich wird, weist der zweite Gegenkörper 6 bzw. die Isolatorplatte 17 eine Gegenkörperelektrode 10 auf. Durch die Fixierung der Isolatorplatte 17 am bzw. auf dem Füllkörper 11, werden die beiden Elektroden 9, 10 so angeordnet, dass sich eine Kapazität ausbildet. Durch die Kapazität lassen sich, im Vergleich zu den aus dem Stand der Technik bekannten Druckwandler 1, die entweder einen resistiven oder kapazitiven Effekt ausnutzen, um eine Druckmessgröße zu ermitteln, zusätzliche Diagnostikfunktionen durchführen. Derartige Diagnostikfunktionen sind bspw. das Ermitteln von Zusatzinformationen über den Druckwandler und/oder das Durchführen von Zusatzfunktionen, die aufgrund der eingebrachten Kapazität ermöglicht werden.

Der Drucksensor 2 umfasst weiterhin, wie in Fig. 4 dargestellt, eine Brückenschaltung 8 die mittels den integrierten Widerstandselemente gebildet ist. Die Brückenschaltung 8 dient dazu, dass eine druckabhängige Auslenkung der Messmembran 3 durch die piezoresisitven Widerstandselemente 4 erfassbar ist und sich über eine sich ergebende Brückenspannung U_{B} eine Druckmessgröße ermitteln lässt.

Die Membranelektrode 9 ist, bspw. über eine in der Messmembran 3 integrierte Leitung, mit dem höchsten oder tiefsten Spannungspunkt der Brückenschaltung 8 verbunden.

Neben der Brückenschaltung 8 umfasst der Druckwandler 1 weiterhin eine Betriebsschaltung 32 die dazu ausgelegt ist, eine variable bzw. einstellbare Spannung an die bzw. zwischen die Membranelektrode 9 und die Gegenkörperelektrode 10 anzulegen.

Ferne ist die Betriebsschaltung 8 dazu eingerichtet, dass nachfolgend beschriebene Verfahren bzw. dessen Verfahrensschritte auszuführen, umso zumindest eine Zusatzinformation und/oder zumindest eine Zusatzfunktion auszuführen.

Das bereits angedeutete Verfahren sieht dabei als ersten Schritt vor, dass die Kapazität und/oder deren Verlauf ermittelt wird. Anhand der ermittelten Kapazität und/oder deren Verlauf lässt sich eine Reihe von Zusatzinformationen über den Druckwandler 1 ermitteln.

So kann bspw. eine redundante Messung bzw. Verifikation der Druckmessgröße durchgeführt werden. Hierzu wird die Brückenspannung U_{B} und/oder deren Verlauf mit einer der Kapazität entsprechenden Kapazitätsspannung und/oder deren Verlauf verglichen und überprüft, ob das Ergebnis in einem vorgegebenen Toleranzbereich liegt.

In dem Fall, dass das Ergebnis in dem vorgegebenen Toleranzbereich liegt, kann die über die integrierten Widerstände ermittelte und durch die Kapazität verifizierte aktuelle Druckmessgröße mit hoher Wahrscheinlichkeit als vertrauenswürdig bzw. wahr angesehen werden, d.h. die aktuell ermittelte Druckmessgröße dürfte im Wesentlichen fehlerfrei sein.

In dem Fall, dass das Ergebnis nicht in dem vorgegebenen Toleranzbereich liegt, kann somit davon ausgegangen werden, dass eine Veränderung des Druckwandlers 1 vorliegt und die aktuelle ermittelte Druckmessgröße nur bedingt vertrauenswürdig ist, d.h. die aktuell ermittelte Druckmessgröße dürfte mit hoher Wahrscheinlichkeit fehlerbehaftet sein.

Neben der redundanten Messung bzw. Verifikation der Druckmessgröße und der daraus abgeleiteten Zusatzinformation kann auch eine Driftdetektion realisiert werden, umso als Zusatzinformation das Vorliegen einer Drift der Brückenspannung bedingt durch veränderte Widerstandswerte der Widerstandselemente festzustellen. Hierzu sieht das Verfahren vor, dass als Prüfkriterium anhand dessen entschieden wird, ob eine Drift vorliegt oder nicht, die Kapazität und/oder deren Verlauf und die Brückenspannung und/oder deren Verlauf in ein Verhältnis gesetzt werden.

Ferner kann gemäß dem Verfahren vorgesehen sein, dass eine Überprüfung einer Prozessmembran als Zusatzfunktion durchgeführt wird. Die zuvor beschriebenen Druckwandler 1 werden typischerweise über eine Prozessmembran von dem Prozessmedium, dessen Mediendruck man messen möchte, getrennt. Um nun eine Überprüfung der Prozessmembran durchzuführen, werden die Kapazität oder deren Verlauf und die Brückenspannung und/oder deren Verlauf miteinander verglichen. Um nun eine Aussage über die Prozessmembran treffen zu können, wird überprüft, ob die Kapazität und/oder deren Verlauf sich ändern wohingegen gleichzeitig die Brückenspannung und/oder deren Verlauf sich im Wesentlichen nicht ändern. In dem Fall, dass dies so ist, liegt mit hoher Wahrscheinlichkeit ein Defekt der Prozessmembran vor.

Ebenfalls kann die Betriebsschaltung 32 dazu eingerichtet sein, dass sie ein Selbsttest des Druckwandlers 1 durchführt. Hierzu wird eine Testspannung an bzw. zwischen die Membranelektrode 9 und die Gegenkörperelektrode 10 angelegt. Die angelegte Testspannung, welche durch die Betriebsschaltung 32 variable bzw. veränderbar in ihrem Spannungswert ist, führt dann zu einer Abstandsänderung zwischen den beiden Elektroden 9, 10. Während des Anliegens der Testspannung wird dann das Verhältnis der Brückenspannung und/oder deren Verlauf zur Kapazität und/oder deren Verlauf ermittelt. Anhand des Verhältnisses kann anschließend eine Aussage getroffen werden, ob eine Veränderung des Druckwandlers vorliegt.

In dem Fall, dass das Verhältnis außerhalb eines Toleranzbereiches liegt, wird eine Veränderung des Druckwandlers 1 erkannt und in dem Fall, dass das Verhältnis innerhalb des Toleranzbereiches liegt, wird keine Veränderung des Druckwandlers erkannt.

## Patentansprüche

1. Druckwandler (1) zum Bestimmen einer Druckmessgröße zumindest umfassend einen Drucksensor (2) mit einer Messmembran (3) und in die Messmembran (3) integrierten Widerstandselementen (4), wobei der Drucksensor (2) zwischen einem ersten und einem zweiten Gegenkörper (5, 6) angeordnet ist und in seinem Randbereich stoffschlüssig zumindest mit dem ersten Gegenkörper (5) verbunden ist, sodass sich eine Druckkammer (7) zwischen der Messmembran (3) und dem ersten Gegenkörper (5) ausbildet, welche mit einem ersten Druck beaufschlagbar ist, wobei die dem zweiten Gegenkörper (6) zugewandte Seite der Messmembran (3) mit einem zweiten Druck beaufschlagbar ist und sich eine Auslenkung der Messmembran (3) abhängig von dem ersten und zweiten Druck einstellt, wobei die druckabhängige Auslenkung der Messmembran (3) durch die integrierten Widerstandselemente (4) erfassbar ist und über eine Brückenspannung (U_{B}) einer Brückenschaltung (8), die mit den integrierten Widerstandselementen (4) gebildet ist, eine Druckmessgröße ermittelbar ist, wobei die Messmembran (3) eine Membranelektrode (9) aufweist und der zweite Gegenkörper (6) auf der der Messmembran (3) zugewandten Seite zumindest in dem Bereich der Messmembran (3) eine Gegenkörperelektrode (10) aufweist, sodass die Membranelektrode (9) und die Gegenkörperelektrode (10) eine Kapazität ausbilden, wobei anhand der Kapazität zumindest eine Zusatzinformation ermittelbar ist,
**dadurch gekennzeichnet, dass**
der Druckwandler weiterhin eine Betriebsschaltung (32) zum Ermitteln der Kapazität und/oder deren Verlauf umfasst, die dazu eingerichtet ist, anhand der Kapazität und/oder deren Verlauf und/oder der Brückenspannung (U_{B}) und/oder deren Verlauf als eine Zusatzinformation eine Drift der Brückenspannung (U_{B}) zu erkennen.

2. Druckwandler nach Anspruch 1, wobei die integrierten Widerstandselemente (4) in Bezug auf ein Substrat des Drucksensors als ein p-n-Übergang ausgebildet sind
und/oder die Membranelektrode (9) in Bezug auf das Substrat als p-n-Übergang ausgebildet ist.

3. Druckwandler nach Anspruch 1 oder 2, wobei die Betriebsschaltung (32) ferner zum Durchführen zumindest einer Zusatzfunktion anhand der Kapazität eingerichtet ist.

4. Druckwandler nach Anspruch 3, wobei die Betriebsschaltung (32) dazu eingerichtet ist, eine variable bzw. einstellbare Spannung an die Membranelektrode (9) und die Gegenkörperelektrode (10) anzulegen.

5. Druckwandler nach einem oder mehreren der vorhergehenden Ansprüche, wobei der zweite Gegenkörper (6) Kunststoff oder Keramik aufweist.

6. Druckwandler nach einem oder mehreren der vorhergehenden Ansprüche, wobei der Drucksensor (1) im Wesentlichen Silizium aufweist.

7. Druckwandler nach einem oder mehreren der vorhergehenden Ansprüche, wobei die Membranelektrode (9) mit dem spannungsmäßig höchsten oder dem niedrigsten Punkt der Brückenschaltung (8) verbunden ist.

8. Verfahren zum Betreiben eines Druckwandlers nach einem oder mehreren der vorhergehenden Ansprüche, wobei das Verfahren folgende Schritte aufweist:
- Ermitteln der Kapazität und/oder deren Verlauf;
- Ermitteln der zumindest einen Zusatzinformation,
**dadurch gekennzeichnet, dass**
anhand der Kapazität und/oder deren Verlauf und/oder der Brückenspannung (UB) und/oder deren Verlauf als Zusatzinformation eine Drift der
Brückenspannung (UB) erkannt wird.

9. Verfahren nach Anspruch 8, wobei ein Vergleich der Brückenspannung (UB) und/oder deren Verlauf mit einer der Kapazität entsprechenden Kapazitätsspannung und/oder deren Verlauf durchgeführt wird und in dem Fall, dass die Brückenspannung (UB) und/oder deren Verlauf und die Kapazitätsspannung und/oder deren Verlauf in einem vorgegebenen Toleranzbereich übereinstimmen, die ermittelte aktuelle Druckmessgröße als vertrauenswürdig angesehen wird.

10. Verfahren nach Anspruch 9, wobei in dem Fall, dass die Brückenspannung (UB) und/oder deren Verlauf und/oder die Kapazitätsspannung und/oder deren Verlauf nicht in dem vorgegebenen Toleranzbereich übereinstimmen, als Zusatzinformation eine Veränderung des Druckwandlers (1) festgestellt wird.

11. Verfahren nach Anspruch 8, wobei zur Erkennung der Drift der Brückenspannung (U_{B}) als Prüfkriterium die Kapazität und/oder deren Verlauf und die Brückenspannung (U_{B}) und/oder deren Verlauf ins Verhältnis gesetzt werden.

12. Verfahren nach einem der Ansprüche 8 bis 11, wobei das Verfahren ferner folgenden Schritt aufweist:
- Durchführen zumindest einer Zusatzfunktion anhand der Kapazität.

13. Verfahren nach Anspruch 12, wobei eine Überprüfung einer Prozessmembran, die den Druckwandler (1) von einem Prozessmedium trennt, als Zusatzfunktion durchgeführt wird, wobei ein Fehler der Prozessmembran erkannt wird, wenn die Kapazität und/oder deren Verlauf sich ändert und die Brückenspannung (U_{B}) und/oder deren Verlauf im Wesentlichen konstant ist.

14. Verfahren nach Anspruch 12 oder 13, wobei durch die Betriebsschaltung (32) eine Testspannung an die Membranelektrode (9) und die Gegenkörperelektrode (10) angelegt wird, sodass sich eine Abstandsänderung zwischen der Membranelektrode (9) und der Gegenkörperelektrode (10) einstellt und ein Selbsttest als Zusatzfunktion durchgeführt wird, in dem das Verhältnis der Brückenspannung (U_{B}) und/oder deren Verlauf zu der Kapazität und/oder deren Verlauf überprüft wird, und in dem Fall, dass dieses Verhältnis nicht in einem vorgegebenen Toleranzbereich liegt, eine Veränderung des Druckwandlers erkannt wird.

## Claims

1. Pressure transducer (1) for determining a pressure measured variable, comprising at least a pressure sensor (2) with a measuring membrane (3) and resistance elements (4) integrated into the measuring membrane (3), wherein the pressure sensor (2) is arranged between a first and a second counterbody (5, 6) and wherein the sensor is connected at its edge at least to the first counterbody (5) via a substance-to-substance connection in such a way that a pressure chamber (7) forms between the measuring membrane (3) and the first counterbody (5), wherein said chamber can be subjected to a first pressure, wherein the side of the measuring membrane (3) facing towards the second counterbody (6) can be subjected to a second pressure and a deflection of the measuring membrane (3), which depends on the first and second pressure, is established, wherein the pressure-dependent deflection of the measuring membrane (3) can be detected by the integrated resistance elements (4) and wherein a pressure measured variable can be detected via a bridge voltage (U_{B}) of a bridge circuit (8), said circuit being formed with the integrated resistance elements (4), wherein the measuring membrane (3) has a membrane electrode (9) and the second counterbody (6) has a counterbody electrode (10) on the side facing towards the measuring membrane (3), at least in the area of the measuring membrane (3) such that the membrane electrode (9) and the counterbody electrode (10) form a capacitance, wherein at least additional information can be determined using the capacitance,
**characterized in that**
the pressure transducer further comprises an operating circuit (32) designed to determine the capacitance and/or its development, which is designed to detect a drift of the bridge voltage (U_{B}) using the capacitance and/or its development and/or the bridge voltage (U_{B}) and/or its development as additional information.

2. Pressure transducer as claimed in Claim 1, wherein the integrated resistance elements (4) are formed as a p-n junction in relation to a substrate of the pressure sensor
and/or the membrane electrode (9) is designed as a p-n junction in relation to the substrate.

3. Pressure transducer as claimed in Claim 1 or 2, wherein the operating circuit (32) is further designed to perform at least an additional function on the basis of the capacitance.

4. Pressure transducer as claimed in Claim 3, wherein the operating circuit (32) is designed to apply a variable or adjustable voltage to the membrane electrode (9) and to the counterbody electrode (10).

5. Pressure transducer as claimed in one or more of the previous claims, wherein the second counterbody (6) comprises plastic or ceramic.

6. Pressure transducer as claimed in one or more of the previous claims, wherein the pressure sensor (1) essentially comprises silicon.

7. Pressure transducer as claimed in one or more of the previous claims, wherein the membrane electrode (9) is connected to the highest or lowest point of the bridge circuit (8) with regard to voltage.

8. Procedure for the operation of a pressure transducer as claimed in one or more of the previous claims, said procedure comprising the following steps:
- Determination of the capacitance and/or its development,
- Determination of at least one item of additional information,
**characterized in that**
on the basis of the capacitance and/or its development and/or the bridge voltage (U_{B}) and/or its development, a drift of the bridge voltage (U_{B}) is detected as additional information.

9. Procedure as claimed in Claim 8, wherein the bridge voltage (U_{B}) and/or its development is compared against the capacitance voltage and/or its development corresponding to the capacitance and, in the event that the bridge voltage (U_{B}) and/or its development and the capacitance voltage and/or its development coincide in a predefined tolerance range, the current pressure measured variable that is determined is considered trustworthy.

10. Procedure as claimed in Claim 9, wherein, in the event that the bridge voltage (U_{B}) and/or its development and/or the capacitance voltage and/or its development do not coincide in the predefined tolerance range, a change in the pressure transducer (1) is determined as additional information.

11. Procedure as claimed in Claim 8, wherein, in order to identify the drift in the bridge voltage (U_{B}) as a test criterion, the capacitance and/or its development and the bridge voltage (U_{B}) and/or its development are put in relation to one another.

12. Procedure as claimed in one of the Claims 8 to 11, wherein said procedure further comprises the following step:
- Performance of at least one additional function using the capacitance.

13. Procedure as claimed in Claim 12, wherein a process membrane, which separates the pressure transducer (1) from a process medium, is checked as an additional function, wherein a fault in the process membrane is detected if the capacitance and/or its development changes and the bridge voltage (U_{B}) and/or its development are essentially constant.

14. Procedure as claimed in Claim 12 or 13, wherein the operating circuit (32) applies a test voltage to the membrane electrode (9) and to the counterbody electrode (10) such that a change in distance between the membrane electrode (9) and the counterbody electrode (10) is established and a self-test is performed as an additional function in that the ratio of the bridge voltage (U_{B}) and/or its development to the capacitance and/or its development is checked and if this ratio is not in a predefined tolerance range, a change in the pressure transducer is detected.

## Revendications

1. Transmetteur de pression (1) destiné à la détermination d'une grandeur de mesure de pression, lequel transmetteur comprend au moins un capteur de pression (2) avec une membrane de mesure (3) et des éléments de résistance (4) intégrés dans la membrane de mesure (3), le capteur de pression (2) étant disposé entre un premier et un deuxième contre-corps (5, 6) et lequel capteur étant relié dans sa zone de bord au moins au premier contre-corps (5) par une liaison de matière, de telle sorte qu'il se forme une chambre de pression (7) entre la membrane de mesure (3) et le premier contre-corps (5), laquelle chambre peut être soumise à une première pression, le côté de la membrane de mesure (3) tourné vers le deuxième contre-corps (6) pouvant être soumis à une deuxième pression et une déviation de la membrane de mesure (3) s'établissant en fonction de la première et de la deuxième pression, la déviation de la membrane de mesure (3) en fonction de la pression pouvant être détectée par les éléments de résistance intégrés (4) et une grandeur de mesure de pression pouvant être déterminée via une tension de pont (U_{B}) d'un circuit en pont (8), lequel circuit est formé avec les éléments de résistance intégrés (4), la membrane de mesure (3) comportant une électrode à membrane (9) et le deuxième contre-corps (6) comportant, sur le côté tourné vers la membrane de mesure (3), au moins dans la zone de la membrane de mesure (3), une électrode de contre-corps (10), de telle sorte que l'électrode à membrane (9) et l'électrode de contre-corps (10) forment une capacité, au moins une information supplémentaire pouvant être déterminée à l'aide de la capacité,
**caractérisé en ce que**
le transmetteur de pression comprend en outre un circuit de fonctionnement (32) destiné à déterminer la capacité et/ou son évolution, lequel circuit est conçu pour détecter une dérive de la tension de pont (U_{B}) à partir de la capacité et/ou de son évolution et/ou de la tension de pont (U_{B}) et/ou de son évolution en tant qu'information supplémentaire.

2. Transmetteur de pression selon la revendication 1, pour lequel les éléments de résistance intégrés (4) sont formés comme une jonction p-n par rapport à un substrat du capteur de pression
et/ou l'électrode à membrane (9) est conçue comme une jonction p-n par rapport au substrat.

3. Transmetteur de pression selon la revendication 1 ou 2, pour lequel le circuit de fonctionnement (32) est en outre conçu pour exécuter au moins une fonction supplémentaire à partir de la capacité.

4. Transmetteur de pression selon la revendication 3, pour lequel le circuit de fonctionnement (32) est conçu pour appliquer une tension variable ou réglable à l'électrode à membrane (9) et à l'électrode de contre-corps (10).

5. Transmetteur de pression selon l'une ou plusieurs des revendications précédentes, pour lequel le deuxième contre-corps (6) comprend du plastique ou de la céramique.

6. Transmetteur de pression selon l'une ou plusieurs des revendications précédentes, pour lequel le capteur de pression (1) comprend pour l'essentiel du silicium.

7. Transmetteur de pression selon l'une ou plusieurs des revendications précédentes, pour lequel l'électrode à membrane (9) est reliée au point le plus haut ou le plus bas en tension du circuit en pont (8).

8. Procédé destiné à l'exploitation d'un transmetteur de pression selon l'une ou plusieurs des revendications précédentes, le procédé comprenant les étapes suivantes :
- Détermination de la capacité et/ou de son évolution,
- Détermination d'au moins une information supplémentaire,
**caractérisé en ce que**
à l'aide de la capacité et/ou de son évolution et/ou de la tension de pont (U_{B}) et/ou de son évolution, on détecte comme information supplémentaire une dérive de la tension de pont (U_{B}).

9. Procédé selon la revendication 8, pour lequel on effectue une comparaison de la tension de pont (U_{B}) et/ou de son évolution avec une tension de capacité et/ou son évolution correspondant à la capacité et, dans le cas où la tension de pont (U_{B}) et/ou son évolution et la tension de capacité et/ou son évolution coïncident dans une gamme de tolérance prédéfinie, on considère que la grandeur de mesure de pression actuelle déterminée est digne de confiance.

10. Procédé selon la revendication 9, pour lequel, dans le cas où la tension de pont (U_{B}) et/ou son évolution et/ou la tension de capacité et/ou son évolution ne coïncident pas dans la gamme de tolérance prédéfinie, on constate, en tant qu'information supplémentaire, une modification du transmetteur de pression (1).

11. Procédé selon la revendication 8, pour lequel, pour identifier la dérive de la tension de pont (U_{B}) en tant que critère de contrôle, la capacité et/ou son évolution et la tension de pont (U_{B}) et/ou son évolution sont mises en rapport.

12. Procédé selon l'une des revendications 8 à 11, ledit procédé comprenant en outre l'étape suivante :
- Exécution d'au moins une fonction supplémentaire à partir de la capacité.

13. Procédé selon la revendication 12, pour lequel un contrôle d'une membrane de process, qui sépare le transmetteur de pression (1) d'un produit de process, est effectué en tant que fonction supplémentaire, un défaut de la membrane de process étant détecté lorsque la capacité et/ou son évolution change et que la tension de pont (U_{B}) et/ou son évolution est sensiblement constante.

14. Procédé selon la revendication 12 ou 13, pour lequel une tension de test est appliquée par le circuit de fonctionnement (32) à l'électrode à membrane (9) et à l'électrode de contre-corps (10), de sorte qu'une modification de la distance entre l'électrode à membrane (9) et l'électrode de contre-corps (10) s'établit et qu'un autotest est effectué en tant que fonction supplémentaire, autotest au cours duquel le rapport entre la tension de pont (U_{B}) et/ou son évolution par rapport à la capacité et/ou son évolution est contrôlé et, dans le cas où ce rapport ne se situe pas dans une gamme de tolérance prédéfinie, une modification du transmetteur de pression est détectée.
